# EUROPÄISCHE PATENTANMELDUNG

(11) **EP 3 407 188 A1**
(43) Veröffentlichungstag der Anmeldung: **28.11.2018**
(21) Anmeldenummer: 17173063.3
(22) Anmeldetag: 26.05.2017
(51) Int. Cl.: G06F 9/445, G06F 9/44

(54) **CONTINUOUS DELIVERY IN TELEKOMMUNIKATIONSNETZWERKEN**

(71) Anmelder: Deutsche Telekom AG, 53113 Bonn (DE)
(72) Erfinder: MÄTHNER, Nils, 53125 Bonn (DE); WIRTHS, Wolfgang, 53125 Bonn (DE); BAATZ, Simon, 53229 Bonn (DE); JÜTTEN, Lars, 50823 Köln (DE); WASSERSCHAFF, Markus, 53123 Bonn (DE); SIDORENKO, Artem, 53225 Bonn (DE); VLAD, Horatiu-Eugen, 53227 Bonn (DE); BURKHARDT, Frank, 45527 Hattingen (DE); STIERL, Kai Patrick, 50765 Köln (DE); WINTER, Judith, 53227 Bonn (DE)
(74) Vertreter: Vossius & Partner Patentanwälte Rechtsanwälte mbB

(57) **Zusammenfassung**

System zur kontinuierlichen und versionskontrollierten Auslieferung und Integration von Software und Konfigurationen in einer Telekommunikationsnetzwerkstruktur, aufweisend: eine Entwicklungsumgebung (10, 20) und eine Auslieferungskontrollumgebung (30), wobei die Entwicklungsumgebung mit der Auslieferungskontrollumgebung über ein erstes Netzwerk (2) verbunden ist; eine Testumgebung (40), die mit der Auslieferungskontrollumgebung über ein zweites Netzwerk (3) verbunden ist; und eine Produktionsumgebung (50), die mit der Auslieferungskontrollumgebung über ein drittes Netzwerk (4) verbunden ist.

## Beschreibung

Die Erfindung betrifft das Gebiet der Telekommunikation. Insbesondere betrifft die Erfindung die kontinuierliche und versionskontrollierte Auslieferung sowie die Integration von Software und Konfigurationen in einer Telekommunikationsnetzwerkstruktur.

Bei der Erstellung von Softwareprodukten, insbesondere bei komplexen Softwareprodukten, haben sich die kontinuierliche und versionskontrollierte Auslieferung (Continuous Delivery, CD) und Integration (Continous Integration, CI) als Methoden etabliert. Dem Fachmann sind eine Vielzahl an Methoden und Verfahren bekannt, um CI/CD zu implementieren. Insbesondere sind mehrere Softwareprodukte bekannt, die Funktionen bereit stellen um die bekannten Anforderungen an CI/CD zu erfüllen, beispielsweise Jenkins oder GitLab.

Moderne Softwareprodukte weisen eine Vielzahl von Softwarekomponenten auf, die einzeln oder in Blöcken entwickelt, aktualisiert und ausgeliefert werden können. Bestimmte Bestandteile der komplexen Softwareprodukte werden auch als Softwareartefakte bezeichnet. Der Programm-Code von komplexen Softwareprodukten weist in der Regel eine Vielzahl von Softwareartefakten auf. Ein Ziel eines CI/CD-Systems ist es, dass einzelne Softwareartefakte weitgehend unabhängig voneinander entwickelt, ausgeliefert und/oder ausgetauscht werden können und zugleich die Abhängigkeiten zwischen diesen beherrschbar sind.

Ein typisches CI/CD-System weist eine Entwicklungsumgebung, eine Testumgebung und eine Produktionsumgebung auf. Softwareartefakte werden in einem weitgehend linearen Prozess in der Entwicklungsumgebung erstellt, aus der Entwicklungsumgebung heraus in die Testumgebung geliefert und nach erfolgreichem Test an die Produktionsumgebung ausgeliefert. Dazu kann aus der Entwicklungsumgebung heraus die Auslieferung in die Testumgebung und/oder die Produktionsumgebung gesteuert werden. Insbesondere kann die Ausführung von Tests in der Testumgebung aus der Entwicklungsumgebung heraus gesteuert werden. Die kontrollierte Weitergabe von Software von einer Verifikationsstufe zur nachfolgenden Stufe wird als Staging bezeichnet.

Bei der herkömmlichen Softwareproduktion sind Entwicklungsumgebung, Testumgebung und Produktionsumgebung oft als virtuelle Umgebungen ausgeführt, welche geteilte Infrastruktur nutzen können. Zumindest ist in der Regel eine direkte Kommunikation zwischen den verschiedenen Umgebungen möglich.

Wird hingegen versucht, die Methoden des CI/CD-Systems auch für die Auslieferung und Integration von Software und Konfigurationen in einem Telekommunikationsnetzwerk zu verwenden, stellen sich einige Probleme: Eine Telekommunikationsnetzwerkstruktur weist in der Regel physische Netzwerk-Komponenten auf, ist besonders schutzbedürftig und unterliegt deshalb besonderen Zugriffsregeln. Man spricht in diesem Zusammenhang von einer Netzwerksegregation.

So sind in einer Telekommunikationsnetzwerkstruktur die Entwicklungsumgebung, die Testumgebung und die Produktionsumgebung voneinander getrennte Netzwerkbereiche, die vorzugsweise sogar physisch voneinander getrennt sind. Ein Zugriff ist nur durch entsprechende Sicherheitseinrichtungen, beispielsweise Firewalls, möglich und unterliegt strikten Sicherheitsregeln. Insbesondere ist die Produktionsumgebung von einem äußeren Zugriff geschützt, um die Funktionsfähigkeit zu sichern. Hierbei unterscheiden die Sicherheitsregeln zwischen aktiven Eingriffen in die sensible Produktionsumgebung von außen, nachfolgend als Push-Zugriff bezeichnet, und einer Bereithaltung von Informationen zum Abruf unter Kontrolle der Produktionsumgebung, nachfolgend als Pull-Zugriff bezeichnet.

Anders gesagt, eine einfache Übertragung der CI/CD-Methoden auf ein Telekommunikationsnetzwerk, ist schon aufgrund der vorhandenen Netzwerkstruktur und der Sicherheitsregeln nicht möglich. Insbesondere scheitert die Implementierung eines CI/CD-Verfahrens an der Abtrennung der Produktionsumgebung von der restlichen Telekommunikationsnetzwerkstruktur. Eine Steuerung der Auslieferung aus einer Entwicklungsumgebung heraus, ist ebenfalls nicht möglich.

Es ist eine Aufgabe der vorliegenden Erfindung, ein System und Verfahren zur kontinuierlichen und versionskontrollierten Auslieferung und Integration von Software und/ oder Konfigurationen in einer Telekommunikationsnetzwerkstruktur zur Verfügung zu stellen. Diese Aufgabe wird mit dem erfindungsgemäßen Gegenstand der unabhängigen Patentansprüche gelöst. Die abhängigen Patentansprüche beziehen sich auf weitere Aspekte der Erfindung.

Es ist ein Kerngedanke der Erfindung, die direkte Steuerung der Auslieferung und Integration, die in herkömmlichen Systemen aus der Entwicklungsumgebung heraus erfolgt, durch eine Auslieferungskontrollumgebung zu ersetzen. In der Auslieferungskontrollumgebung, die von der Entwicklungsumgebung, der Testumgebung und der Produktionsumgebung netzwerktechnisch getrennt ausgeführt ist, findet eine sternförmige Bereitstellung der entsprechenden Release-Bundles, zu Deutsch (Software)-Freigabebündel, für die Testumgebung und die Produktionsumgebung statt.

Die Steuerung der Bereitstellung wird von einer Staging-Kontrolleinrichtung übernommen, die dazu auf Deskriptoren zurückgreift, welche entsprechende Beschreibungsdateien nutzen, die in der Entwicklungsumgebung bereit gestellt werden. Mit einem solchen System und Verfahren werden die akzeptierten und einzuhaltenden Sicherheitsregeln für den Betrieb von Telekommunikationsnetzwerken nicht verletzt.

Erfindungsgemäß weist ein System zur kontinuierlichen und versionskontrollierten Auslieferung und Integration von Software und Konfigurationen in einer Telekommunikationsnetzwerkstruktur auf: eine Entwicklungsumgebung und eine Auslieferungskontrollumgebung, wobei die Entwicklungsumgebung mit der Auslieferungskontrollumgebung über ein erstes Netzwerk verbunden ist; eine Testumgebung, die mit der Auslieferungskontrollumgebung über ein zweites Netzwerk verbunden ist und eine Produktionsumgebung, die mit der Auslieferungskontrollumgebung über ein drittes Netzwerk verbunden ist. Das dritte Netzwerk weist Sicherheitsrichtlinien auf, die festlegen, dass das zweite Netzwerk und das dritte Netzwerk voneinander getrennt sind. Die Auslieferungskontrollumgebung weist ein erstes Softwareartefakt-Repositorium auf, das eingerichtet ist, Release-Bundles für die Produktionsumgebung bereit zu halten, und weist ein zweites Softwareartefakt-Repositorium auf, das eingerichtet ist, Release-Bundles für die Testumgebung bereit zu halten. Das System weist eine Staging-Kontrolleinrichtung auf, die eingerichtet ist, basierend auf einem Release-Deskriptor und einem Umgebungs-Deskriptor je Zielumgebung, zu steuern, welche Softwareartefakte für ein Release-Bundle für die Auslieferung an die Testumgebung auf dem zweiten Softwareartefakt-Repositorium repliziert werden und welche Softwareartefakte für ein Release-Bundle für die Auslieferung an die Produktionsumgebung auf dem ersten Softwareartefakt-Repositorium repliziert werden. Die Staging-Kontrolleinrichtung ist eingerichtet, Steuerungsdateien für den Release-Deskriptor und/oder den Umgebungs-Deskriptor aus der Entwicklungsumgebung über das erste Netzwerk zu empfangen. Die Steuerungsdatei des Umgebungs-Deskriptors enthält Informationen über ein oder mehrere Release-Bundle(s) auf einer bestimmten Instantiierung der Testumgebung und/oder der Produktionsumgebung und die Steuerungsdatei des Release-Deskriptors enthält für jedes Softwareartefakt mindestens Informationen über eine Identität, eine Versionsnummer und eine Release-Bundle -Zugehörigkeit.

In einem Aspekt der Erfindung weist das dritte Netzwerk Sicherheitsrichtlinien auf, die festlegen, dass kein Push-Zugriff von der Auslieferungskontrollumgebung auf die Produktionsumgebung möglich ist, dass ein Pull-Zugriff aus der Produktionsumgebung auf die Auslieferungskontrollumgebung möglich ist.

In einer alternativen Ausführungsform weist ein System zur kontinuierlichen und versionskontrollierten Auslieferung und Integration von Software und Konfigurationen in einer Telekommunikationsnetzwerkstruktur auf: eine Entwicklungsumgebung und eine Auslieferungskontrollumgebung, wobei die Entwicklungsumgebung mit der Auslieferungskontrollumgebung über ein erstes Netzwerk verbunden ist; eine Testumgebung, die mit der Auslieferungskontrollumgebung über ein zweites Netzwerk verbunden ist und eine Produktionsumgebung, die mit der Auslieferungskontrollumgebung über ein drittes Netzwerk verbunden ist. Das dritte Netzwerk weist Sicherheitsrichtlinien auf, die festlegen, dass kein Push-Zugriff von der Auslieferungskontrollumgebung auf die Produktionsumgebung möglich ist, dass ein Pull-Zugriff aus der Produktionsumgebung auf die Auslieferungskontrollumgebung möglich ist und dass das zweite Netzwerk und das dritte Netzwerk voneinander getrennt sind. Die Auslieferungskontrollumgebung weist ein erstes Softwareartefakt-Repositorium auf, das eingerichtet ist, Release-Bundles für die Produktionsumgebung bereit zu halten, und weist ein zweites Softwareartefakt-Repositorium auf, das eingerichtet ist, Release-Bundles für die Testumgebung bereit zu halten. Das System weist eine Staging-Kontrolleinrichtung auf, die eingerichtet ist, basierend auf einem Release-Deskriptor und einem Umgebungs-Deskriptor je Zielumgebung, d.h. je Testumgebung bzw. Produktionsumgebung, zu steuern, welche Softwareartefakte für ein Release-Bundle für die Auslieferung an die Testumgebung auf dem zweiten Softwareartefakt-Repositorium repliziert werden und welche Softwareartefakte für ein Release-Bundle für die Auslieferung an die Produktionsumgebung auf dem ersten Softwareartefakt-Repositorium repliziert werden. Die Staging-Kontrolleinrichtung ist eingerichtet, Steuerungsdateien für den Release-Deskriptor und/oder den Umgebungs-Deskriptor aus der Entwicklungsumgebung über das erste Netzwerk zu empfangen. Die Steuerungsdatei des Umgebungs-Deskriptors enthält Informationen über ein oder mehrere Release-Bundle(s) auf einer bestimmten Instantiierung der Testumgebung und/oder der Produktionsumgebung und die Steuerungsdatei des Release-Deskriptors enthält für jedes Softwareartefakt mindestens Informationen über eine Identität, eine Versionsnummer und eine Release-Bundle -Zugehörigkeit.

In einer alternativen Ausführungsform weist ein System zur kontinuierlichen und versionskontrollierten Auslieferung und Integration von Software und Konfigurationen in einer Telekommunikationsnetzwerkstruktur, auf: eine Entwicklungsumgebung und eine Auslieferungskontrollumgebung, wobei die Entwicklungsumgebung mit der Auslieferungskontrollumgebung über ein erstes Netzwerk verbunden ist und eine Produktionsumgebung, die mit der Auslieferungskontrollumgebung über ein drittes Netzwerk verbunden ist. Das dritte Netzwerk weist Sicherheitsrichtlinien auf, die festlegen, dass kein Push-Zugriff von der Auslieferungskontrollumgebung auf die Produktionsumgebung möglich ist, dass ein Pull-Zugriff aus der Produktionsumgebung auf die Auslieferungskontrollumgebung möglich ist. Die Auslieferungskontrollumgebung weist ein erstes Softwareartefakt-Repositorium auf, das eingerichtet ist, Release-Bundles für die Produktionsumgebung bereit zu halten. Das System weist eine Staging-Kontrolleinrichtung auf, die eingerichtet ist, basierend auf einem Release-Deskriptor und einem Umgebungs-Deskriptor je Zielumgebung, d.h. je Produktionsumgebung, zu steuern, welche Softwareartefakte für ein Release-Bundle für die Auslieferung an die Produktionsumgebung auf dem ersten Softwareartefakt-Repositorium repliziert werden. Die Staging-Kontrolleinrichtung ist eingerichtet, Steuerungsdateien für den Release-Deskriptor und/oder den Umgebungs-Deskriptor aus der Entwicklungsumgebung über das erste Netzwerk zu empfangen. Die Steuerungsdatei des Umgebungs-Deskriptors enthält Informationen über ein oder mehrere Release-Bundle(s) auf einer bestimmten Instantiierung der Produktionsumgebung und die Steuerungsdatei des Release-Deskriptors enthält für jedes Softwareartefakt mindestens Informationen über eine Identität, eine Versionsnummer und eine Release-Bundle-Zugehörigkeit.

In einer alternativen Ausführungsform weist ein System zur kontinuierlichen und versionskontrollierten Auslieferung und Integration von Software und Konfigurationen in einer Telekommunikationsnetzwerkstruktur auf: eine Entwicklungsumgebung und eine Auslieferungskontrollumgebung, wobei die Entwicklungsumgebung mit der Auslieferungskontrollumgebung über ein erstes Netzwerk verbunden ist; eine Testumgebung, die mit der Auslieferungskontrollumgebung über ein zweites Netzwerk verbunden ist und eine Produktionsumgebung, die mit der Auslieferungskontrollumgebung über ein drittes Netzwerk verbunden ist. Das dritte Netzwerk weist Sicherheitsrichtlinien auf, die festlegen, dass kein Push-Zugriff von der Auslieferungskontrollumgebung auf die Produktionsumgebung möglich ist, dass ein Pull-Zugriff aus der Produktionsumgebung auf die Auslieferungskontrollumgebung möglich ist und dass das zweite Netzwerk und das dritte Netzwerk voneinander getrennt sind. Die Auslieferungskontrollumgebung weist ein erstes Softwareartefakt-Repositorium auf, das eingerichtet ist, Release-Bundles für die Produktionsumgebung bereit zu halten, und weist ein zweites Softwareartefakt-Repositorium auf, das eingerichtet ist, Release-Bundles für die Testumgebung bereit zu halten. Das System weist eine Staging-Kontrolleinrichtung auf, die eingerichtet ist, basierend auf einem Release-Deskriptor und einen Umgebungs-Deskriptor, zu steuern, welche Softwareartefakte für ein Release-Bundle für die Auslieferung an die Testumgebung auf dem zweiten Softwareartefakt-Repositorium repliziert werden und welche Softwareartefakte für ein Release-Bundle für die Auslieferung an die Produktionsumgebung auf dem ersten Softwareartefakt-Repositorium repliziert werden. Die Staging-Kontrolleinrichtung ist eingerichtet, Steuerungsdateien für den Release-Deskriptor und/oder den Umgebungs-Deskriptor aus der Entwicklungsumgebung über das erste Netzwerk zu empfangen. Die Steuerungsdatei des Umgebungs-Deskriptors enthält Informationen über ein Release-Bundle auf einer bestimmten der Testumgebung und/oder der Produktionsumgebung und die Steuerungsdatei des Release-Deskriptors enthält für jedes Softwareartefakt mindestens Informationen über eine Versionsnummer und eine Release-Bundle -Zugehörigkeit.

In einem Aspekt der Erfindung sind der Release-Deskriptor und/oder der Umgebungs-Deskriptor in der Auslieferungskontrollumgebung gespeichert.

In einem Aspekt der Erfindung sind das zweite und das dritte Netzwerk vorzugsweise physisch voneinander getrennt, und/oder die Auslieferungskontrollumgebung weist zur Trennung der Netzwerke erste Sicherheitseinrichtungen auf, wobei die ersten Sicherheitseinrichtungen über die Sicherheitsrichtlinien gesteuert werden.

In einem Aspekt der Erfindung weist die Entwicklungsumgebung eine Zuliefererumgebung und eine Integrationsumgebung auf, die über ein viertes Netzwerk verbunden sind. Alternativ oder ergänzend weist die Integrationsumgebung ein Versionskontrollrepositorium und ein Softwareartefakt-Repositorium auf.

In einem Aspekt der Erfindung weist die Integrationsumgebung zur Trennung der Netzwerke zweite Sicherheitseinrichtungen auf, wobei die zweiten Sicherheitseinrichtungen über die Sicherheitsrichtlinien gesteuert werden.

In einem Aspekt der Erfindung enthält ein Release-Bundle mindestens eines der folgenden:
a) paketierte Software, vorzugsweise in einem rpm- und/oder deb-Paketformat,
b) Software-Images, vorzugsweise Virtual Machine Images und/oder Container images,
c) generische Dateien, vorzugsweise tar und/oder zip Archive,
d) VNF-Pakete und Artefakte gemäß NVF-MANO-Architektur.
Alternativ oder ergänzend enthält ein Release-Bundle ein weiteres Release-Bundle.

In einem Aspekt der Erfindung nutzen die Steuerungsdateien yaml-, json-, und/oder xml-Formate. Alternativ oder ergänzend sind die Beschreibungsdateien kryptographisch signiert, um deren Authentizität und Integrität zu garantieren.

In einem Aspekt der Erfindung werden die Beschreibungsdateien vor ihrer Ausführung von einer Policy-Funktion, basierend auf einer Sicherheitsrichtlinie, auf Zulässigkeit überprüft.

Weiter erfindungsgemäß ist ein Verfahren zur Steuerung eines Systems nach einem der vorstehenden Aspekte, wobei das Verfahren die folgenden Schritte aufweist:
a) Bereitstellen eines Release-Bundles von der Entwicklungsumgebung an die Auslieferungskontrollumgebung über die erste Netzwerkverbindung;
b) Bereitstellen des Release-Bundles auf dem ersten und/oder zweiten Softwareartefakt-Repositorium durch die Staging-Kontrolleinrichtung und Veröffentlichen des Release-Bundles auf dem ersten und/oder zweiten Softwareartefakt-Repositorium durch die Staging-Kontrolleinrichtung;
c) Auslieferung des Release-Bundles von dem zweiten Softwareartefakt-Repositorium an die Testumgebung nach Anforderung durch einen manuellen und/oder automatisierten Anforderungsprozess in der Testumgebung und Test des Release-Bundles in der Testumgebung.
d) Bereitstellen und Veröffentlichen des Release-Bundles auf dem ersten und dem zweiten Softwareartefakt-Repositorium durch die Staging-Kontrolleinrichtung;
e) Auslieferung des Release-Bundles von dem ersten Softwareartefakt-Repositorium an die Produktionsumgebung nach einer Pull-Anforderung durch einen manuellen und/oder automatisierten Anforderungsprozess in der Produktionsumgebung.

Vorzugsweise sind die erfindungsgegenständlichen Verfahren computerimplementiert. Vorzugsweise sind die erfindungsgegenständlichen Verfahren teilweise computerimplementiert und werden teilweise durch einen Nutzer ausgeführt.

Die Erfindung betrifft auch ein Computerprogrammprodukt, umfassend Befehle, die bei der Ausführung des Programms durch einen Computer diesen veranlassen, eines der vorstehend genannten Verfahren auszuführen.

Entsprechend dem Grundgedanken der Erfindung erfolgt in einer Ausführungsform der Erfindung die Übergabe von versionierten Artefakten aus der Entwicklungsdomäne in die Testumgebung bzw. Produktionsumgebung unter Nutzung von Repositorien unter Einhaltung einer strikten netztechnischen Segregation, vorzugsweise einer logischen oder sogar physikalischen Netztrennung, zwischen Produktionsumgebung, Testumgebung und Entwicklungsumgebung.

In einer Ausführungsform der Erfindung erfolgt die Kontrolle der Informationsflüsse an allen Netzgrenzen mittels Web Application Firewalls, WAF. Die Beschreibung der Zusammengehörigkeit einer Menge von Artefakten, jeweils individuell durch eine Artefakt-Version gekennzeichnet, zu einem auszuliefernden Release-Bundle kann mittels eines sowohl für Menschen lesbaren als auch maschinell ausführbaren Beschreibungsformates erfolgen. Auch die Beschreibung der Policies zur Steuerung der Sichtbarkeit von Release-Bundles in einer wählbaren Anzahl von Deployment-Umgebungen in der Testumgebung bzw. Produktionsumgebung kann mittels eines sowohl für Menschen lesbaren als auch maschinell ausführbaren Beschreibungsformates erfolgen. Zugriffe können nach dem Pull-Prinzip aus der als besonders schutzbedürftig betrachteten Produktionsumgebung in Richtung der Entwicklungsumgebung erfolgen.

In einer Ausführungsform der Erfindung werden ausgelieferte Release-Bundles zusätzlich zur Sichtbarkeit in einer Zielumgebung dort automatisch aktiviert und ausgeführt, Continuous Deployment / Zero Touch Deployment, vorzugweise unter Nutzung von NFV-Orchestration. In einer Ausführungsform der Erfindung werden ausgelieferte und gegebenenfalls automatisch ausgeführte Release-Bundles dazu genutzt, andere Release-Bundles zu testen bzw. zu verifizieren.

In einer Ausführungsform der Erfindung können innerhalb eines Releases die Artefakte aus mehr als einer Quelle, d.h. mehreren Quell-Repositorien, referenziert und bezogen werden.

In einer Ausführungsform der Erfindung kann ein Release zusätzlich zu den beinhalteten Artefakten, d.h. den Bestandteilen dieser Auslieferung, auch auf Releases anderer Software referenzieren. So können Versionsabhängigkeiten modelliert und geprüft werden, die über den einzelnen Liefergegenstand hinausgehen; beispielsweise: wenn Software A in Version x genutzt werden soll, dann muss Software B mindestens in Version y vorliegen.

In einer Ausführungsform der Erfindung werden die Beschreibungsdateien vor ihrer Ausführung von einer Policy-Funktion auf Zulässigkeit überprüft. So lassen sich u.a. durch Abgleich mit CERT-Advisories solche Release-Bundles erkennen, die veraltete Komponenten mit kritischen Sicherheitslücken beinhalten.

In einer Ausführungsform der Erfindung werden die erzeugten Service-Instanzen zur Laufzeit gegen die Beschreibungsdateien auditiert. So lassen sich nachträgliche, gegebenenfalls sicherheitskritische Abweichungen vom Soll-Zustand erkennen.

In einer Ausführungsform der Erfindung werden festgestellte Policy-Verletzungen bzw. Abweichungen vom Soll-Zustand automatisiert korrigiert, vorzugsweise durch Enforcement einer zulässigen Konfiguration.

Die Erfindung wird nachstehend anhand von Beispielen und der Zeichnung näher erläutert.

Es zeigt:

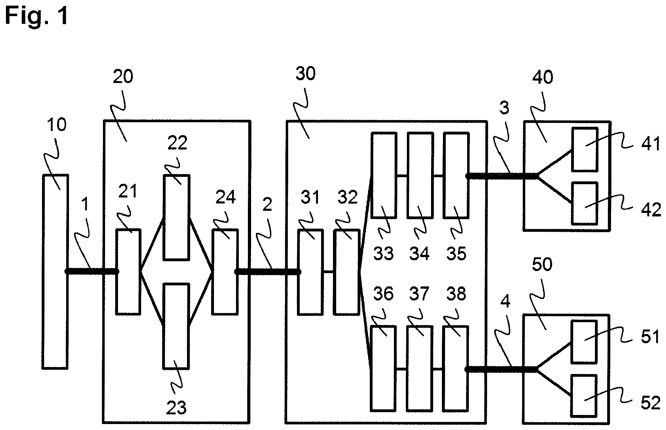

Figur 1 ein Blockdiagramm einer erfindungsgemäßen Ausführungsform des Systems und einer Telekommunikationsnetzwerkstruktur.

Gemäß dem Grundgedanken der Erfindung soll eine Software und/oder Konfiguration von einer Entwicklungsumgebung 10, 20 an eine Testumgebung 40 und eine Produktionsumgebung 50 ausgeliefert werden. Dabei soll die Auslieferung eine Einhaltung bestimmter für Telekommunikationsanbieter spezifischen Sicherheitsanforderungen ermöglichen. Bei der Software und/oder Konfiguration kann es sich beispielsweise um Software und/oder Konfigurationen für Telekommunikationsnetzwerkstrukturkomponenten wie Nutzerendgeräte oder Netzwerkknoten handeln.

Die Entwicklungsumgebung 10, 20 weist dabei einen Zuliefererbereich 10 und einen Integrationsbereich 20 auf. Der externe Zuliefererbereich 10 ist mit dem Integrationsbereich 20 über ein externes Netzwerk 1 verbunden. Im Integrationsbereich 20 ist eine Sicherheitseinrichtung 21 vorgesehen, die eine Sicherheitsfilterfunktion für die Netzwerkverbindung mit dem externen Netzwerk 1 ausführt. Weiterhin befinden sich in dem Integrationsbereich mindestens ein Versionskontrollrepositorium 22 und mindestens ein Softwareartefakt-Repositorium 23. Eine weitere Sicherheitseinrichtung 24 ist vorgesehen, um eine Sicherheitsfilterfunktion für eine erste Netzwerkverbindung 2 zu ermöglichen.

Erfindungsgemäß weist die Telekommunikationsnetzwerkstruktur eine Auslieferungskontrollumgebung 30 auf, die sowohl mit der Entwicklungsumgebung 10, 20 als auch mit der Testumgebung 40 und der Produktionsumgebung 50 verbunden ist.

Die Verbindung zwischen der Entwicklungsumgebung 10,20 und der Auslieferungskontrollumgebung 30 basiert auf der ersten Netzwerkverbindung 2.

Die Verbindung zwischen der Auslieferungskontrollumgebung 30 und der Testumgebung 40 basiert auf einer zweiten Netzwerkverbindung 3.

Die Verbindung zwischen der Auslieferungskontrollumgebung 30 und der Produktionsumgebung 50 basiert auf einer dritten Netzwerkverbindung 4.

In der Auslieferungskontrollumgebung 30 sind zwei Softwareartefakt Repositorien 34 und 37 vorgesehen. Für beide Softwareartefakt Repositorien 34 und 37 werden Softwareartefakte von einer Staging-Kontrolleinrichtung 32 zur Verfügung gestellt. Jedoch sind dem zweiten Softwareartefakt Repositorium 34 nur jene Softwareartefakte sichtbar, die für die Testumgebung 40 bestimmt sind und dem ersten Softwareartefakt Repositorium 37 nur jene Softwareartefakte sichtbar, die für die Produktionsumgebung 50 bestimmt sind.

Zur Steuerung der Sichtbarkeit einzelner Softwareartefakte für die Softwareartefakt Repositorien 34 und 37 wird die Staging-Kontrolleinrichtung 32 eingesetzt. Die Staging-Kontrolleinrichtung 32 greift auf einen oder mehrere Umgebungs-Deskriptoren und einen oder mehrere Release-Deskriptoren zu, die in einem Versionskontrollrepositorium 22 bereitgestellt werden. Die Deskriptoren dienen dazu, Abhängigkeiten zu modellieren und automatisch aufzulösen. Der Release Deskriptor definiert welche Artefakte in welchen Artefakt-Versionen zu einer gewünschten Release-Version gehören sollen. Der Umgebungs-Deskriptor definiert für eine gewünschte Zielumgebung, welche Release-Versionen dort sichtbar sein sollen.

Mit anderen Worten werden alle zu den definierten Release-Versionen gehörigen Artefakte in der Staging-Kontrolleinrichtung 32 für die Zielumgebungen sichtbar geschaltet und in der Folge von den entsprechenden Repositorien 34 und 37 repliziert.

Ferner wird über die Staging-Kontrolleinrichtung 32 sichergestellt, dass Artefakte von den Softwareartefakt Repositorien 34 und 37 entfernt werden, wenn sie nach Vorgabe der aktuellen Deskriptoren nicht mehr vorliegen dürfen.

Die im Versionskontrollrepositorium 22 bereitgestellten Release-Deskriptoren werden im Rahmen des Continuous Integration (CI) Prozesses vorzugsweise automatisch erzeugt und eingebracht.

Die im Versionskontrollrepositorium 22 bereitgestellten Umgebungs-Deskriptoren repräsentieren Freigabeentscheidungen für bestimmte Release-Bundles in Bezug auf bestimmte Umgebungen. In einer Ausführungsform der Erfindung werden die Umgebungs-Deskriptoren manuell erzeugt und eingebracht. In einer alternativen Ausführungsform der Erfindung werden die Umgebungs-Deskriptoren automatisiert erzeugt und eingebracht, vorzugsweise basierend auf automatisierten Entscheidungen über den Erfolg bzw. Misserfolg einer voran gegangenen Teststufe.

Die Staging-Kontrolleinrichtung 32 in der Auslieferungskontrollumgebung 30 überwacht Zustandsänderungen des Versionskontrollrepositorium 22 und bringt geänderte Deskriptoren automatisiert zur Ausführung. Der Zugriff erfolgt über die erste Netzwerkverbindung 2.

Um eine Trennung der einzelnen Umgebungen, insbesondere der Testumgebung 40 und der Produktionsumgebung 50 sicher zu stellen, sind erste Sicherheitseinrichtungen 31, 33, 35, 36 und 38 in der Auslieferungskontrollumgebung 30 vorgesehen.

In den verschiedenen Sicherheitseinrichtungen 31, 33, 35, 36 und 38 sind entsprechende Sicherheitsfilterfunktionen implementiert. Dabei ist je eine Sicherheitsfilterfunktion zur Sicherung der ersten, zweiten und dritten Netzwerkverbindung 2, 3, 4 vorgesehen, sowie je eine zusätzliche Sicherheitsfilterfunktion zwischen der Staging-Kontrolleinrichtung 32 und den Softwareartefakt Repositorien 33 und 37.

In der Testumgebung 40 kann entweder ein manueller Anforderungsprozess 41 oder ein automatisierter Anforderungsprozess 42 ausgeführt werden, um ein bestimmtes Release von dem entsprechenden Softwareartefakt Repositorium 34 zu beziehen.

In der Produktionsumgebung 50 kann entweder ein manueller Anforderungsprozess 51 oder ein automatisierter Anforderungsprozess 52 ausgeführt werden, um ein bestimmtes Release von dem entsprechenden Softwareartefakt Repositorium 37 zu beziehen.

Entsprechend der in Telekommunikationsnetzwerken üblichen Sicherheitsregeln ist ein Push Zugriff auf die Produktionsumgebung 50 über die Netzwerkverbindung 4 nicht möglich. Auf der anderen Seite ist eine Pull Anforderung aus der Produktionsumgebung 50 an die Auslieferungskontrollumgebung 30, insbesondere ein Zugriff auf das Softwareartefakt Repositorium 37, unter Einhaltung aller gängigen Sicherheitsregeln für Telekommunikationsnetzwerke möglich.

Entsprechend des bisher dargestellten erfindungsgemäßen Systems ergibt sich ein Verfahren zur kontinuierlichen und versionskontrollierten Auslieferung und Integration.

Der kontinuierliche Auslieferungsprozess beginnt in der Entwicklungsumgebung 10, 20 mit der Bereitstellung eines Release-Bundles. Ein Release-Bundle kann wahlweise
a) in einer Zuliefererumgebung erstellt und an eine Integrationsumgebung übergeben werden, welche es ohne Veränderung an die Auslieferungsumgebung weiterreicht;
b) in einer Zuliefererumgebung erstellt und an eine Integrationsumgebung übergeben werden, welche die enthaltenen Artefakte und zusätzliche, integrations-spezifische Artefakte zu einem neuen, integrierten Release-Bundle kombiniert, welches sie an die Auslieferungsumgebung weiterreicht;
c) in einer Zuliefererumgebung erstellt und an eine Integrationsumgebung übergeben werden, welche das unveränderte Release-Bundle und zusätzliche, integrations-spezifische Artefakte zu einem neuen, integrierten Release-Bundle kombiniert, welches sie an die Auslieferungsumgebung weiterreicht;
d) ohne Mitwirkung eines Zulieferers in einer Integrationsumgebung erstellt und an die Auslieferungsumgebung weiter gereicht werden.

Ein Release-Bundle besteht aus mehreren, individuell versionierten Artefakten und einem Release-Deskriptor, welcher die Zugehörigkeit von Artefakten zum Release-Bundle definiert. Ein aus nur einem Artefakt bestehendes Release-Bundle stellt einen Sonderfall dar, der aber als Trivialfall technisch zulässig ist. Es ist ein Vorteil der erfindungsgemäßen Lösung, dass nur diejenigen Artefakte übergeben und transferiert werden müssen, die sich von einem Release-Bundle zum nächsten tatsächlich geändert haben.

Der Auslieferungsprozess besteht aus der Bereitstellung des Release-Bundles und einem oder mehreren Propagierungs-Prozessschritten. Die Bereitstellung des Release-Bundles umfasst die Bereitstellung aller zugehörigen Artefakte auf dem Softwareartefakt-Repositorium 23, gefolgt von der Bereitstellung einer Beschreibungsdatei für den Release-Deskriptor auf dem Versionskontrollrepositorium 22. Danach erfolgen ein oder mehrere Propagierungs-Prozessschritte, welche durch Bereitstellung von Beschreibungsdateien für die Umgebungs-Deskriptoren auf dem Versionskontrollrepositorium 22 gesteuert werden.

In der Regel wird ein bereitgestelltes Release-Bundle zunächst in die Testumgebung 40 propagiert. Dies wird dadurch veranlasst, dass ein Umgebungs-Deskriptor 'test' im Versionskontrollrepositorium 22 bereitgestellt wird, welcher das gewünschte Release-Bundle einschließt. Die Staging-Kontrolleinrichtung 32 wertet den Umgebungs-Deskriptor ,test' und alle in diesem referenzierten Release-Deskriptoren aus, um die Gesamtheit aller Artefakte zu bestimmen, welche für das ,test' Softwareartefakt-Repositorium 34 sichtbar sein sollen. Der Bezeichner ,test' spezifiziert hier die Zielumgebung, die eine Testumgebung ist. Das Softwareartefakt-Repositorium 34 bezieht in der Folge alle sichtbaren Artefakte von der Staging-Kontrollfunktion 32.

Im Anschluss an den Propagierungs-Prozessschritt erfolgt ein Ausführungs-Prozessschritt. Dieser kann wahlweise auf dem Testsystem 40 als manuelle Ausführungsfunktion 41 ausgelöst werden oder mit Hilfe einer automatischen Ausführungsfunktion 42 ausgeführt werden, sobald der Propagierungs-Prozessschritt abgeschlossen ist.

Als Ergebnis der Testausführung wird eine Freigabeentscheidung getroffen, welche im positiven Fall die Propagierung des Release-Bundles in die Produktionsumgebung 50 bewirkt.

Die Propagierung des Release-Bundles in die Produktionsumgebung 50 wird dadurch veranlasst, dass ein Umgebungs-Deskriptor 'prod' im Versionskontrollrepositorium 22 bereitgestellt wird, welcher das gewünschte Release-Bundle einschließt. Der Bezeichner 'prod' spezifiziert hier die Zielumgebung, die eine Produktionsumgebung ist. Die Staging-Kontrolleinrichtung 32 wertet den Umgebungs-Deskriptor 'prod' und alle in diesem referenzierten Release-Deskriptoren aus, um die Gesamtheit aller Artefakte zu bestimmen, welche für das 'prod' Softwareartefakt-Repositorium 37 sichtbar sein sollen. Das Softwareartefakt-Repositorium 37 bezieht in der Folge alle sichtbaren Artefakte von der Staging-Kontrolleinrichtung 32.

Im Anschluss an den Propagierungs-Prozessschritt erfolgt auch hier ein Ausführungs-Prozessschritt. Dieser kann wahlweise auf dem Produktionssystem 50 als manueller Ausführungsschritt 51 ausgelöst werden oder mit Hilfe einer automatischen Ausführungsfunktion 52 ausgeführt werden, sobald der Propagierungs-Prozessschritt abgeschlossen ist.

Die Anzahl und die Ziele der Propagierungs-Prozessschritte sind wählbar durch Anzahl und Konfiguration der Umgebungs-Deskriptoren, um unterschiedlichen Prozessanforderungen Rechnung zu tragen. So ist es möglich, ein Release-Bundle in mehr als nur eine Testumgebung zu propagieren, wenn beispielweise eine Differenzierung zwischen Testgegenstand und stabilem Referenzsystem benötigt wird. Alternativ oder ergänzend kann auf Testumgebungen verzichtet werden, falls dieses vom Nutzer gewünscht ist. Ebenso können auf der Produktionsseite mehrere Umgebungen mit unterschiedlichen Release-Bundles versorgt werden, um Methoden wie Canary-Deployment oder Blue-Green-Deployment zu unterstützen.

Obwohl die Erfindung mittels der Figur 1 und der zugehörigen Beschreibung dargestellt und detailliert beschrieben ist, ist diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in der Figur auch wenn sie dort im Zusammenhang mit anderen Merkmalen gezeigt sind und/oder vorstehend oder nachfolgend nicht genannt sind. Auch können die in der Figur und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

## Patentansprüche

1. System zur kontinuierlichen und versionskontrollierten Auslieferung und Integration von Software und Konfigurationen in einer Telekommunikationsnetzwerkstruktur, aufweisend:
eine Entwicklungsumgebung (10, 20) und eine Auslieferungskontrollumgebung (30), wobei die Entwicklungsumgebung (10, 20) mit der Auslieferungskontrollumgebung (30) über ein erstes Netzwerk (2) verbunden ist;
eine Testumgebung (40), die mit der Auslieferungskontrollumgebung (30) über ein zweites Netzwerk (3) verbunden ist; und
eine Produktionsumgebung (50), die mit der Auslieferungskontrollumgebung (30) über ein drittes Netzwerk (4) verbunden ist;
wobei das dritte Netzwerk (4) Sicherheitsrichtlinien aufweist, die festlegen, dass das zweite Netzwerk (3) und das dritte Netzwerk (4) voneinander getrennt sind;
wobei die Auslieferungskontrollumgebung (30) ein erstes Softwareartefakt-Repositorium (37) aufweist, das eingerichtet ist, Release-Bundle für die Produktionsumgebung (50) bereit zu halten, und ein zweites Softwareartefakt-Repositorium (34) aufweist, das eingerichtet ist, Release-Bundles für die Testumgebung (40) bereitzuhalten;
wobei das System eine Staging-Kontrolleinrichtung (32) aufweist, die eingerichtet ist, basierend auf einem Release-Deskriptor und einem Umgebungs-Deskriptor je Zielumgebung, zu steuern, welche Softwareartefakte für ein Release-Bundle für die Auslieferung an die Testumgebung (40) auf dem zweiten Softwareartefakt-Repositorium (34) repliziert werden und welche Softwareartefakte für ein Release-Bundle für die Auslieferung an die Produktionsumgebung (50) auf dem ersten Softwareartefakt-Repositorium (37) repliziert werden; und
wobei die Staging-Kontrolleinrichtung (32) eingerichtet ist, Steuerungsdateien für den Release-Deskriptor und/oder den Umgebungs-Deskriptor aus der Entwicklungsumgebung (10, 20) über das erste Netzwerk (2) zu empfangen und die Steuerungsdatei des Umgebungs-Deskriptors Informationen über ein oder mehrere Release-Bundle(s) auf einer bestimmten Instanziierung der Testumgebung (40) und/oder der Produktionsumgebung enthält und die Steuerungsdatei des Release-Deskriptors für jedes Softwareartefakt mindestens Informationen über eine Identität, eine Versionsnummer und eine Release-Bundle-Zugehörigkeit enthält.

2. System nach Anspruch 1, wobei das dritte Netzwerk (4) Sicherheitsrichtlinien aufweist, die festlegen, dass kein Push-Zugriff von der Auslieferungskontrollumgebung (30) auf die Produktionsumgebung (50) möglich ist und dass ein Pull-Zugriff aus der Produktionsumgebung (50) auf die Auslieferungskontrollumgebung (30) möglich ist.

3. System nach Anspruch 1 oder 2, wobei der Release-Deskriptor und/oder der Umgebungs-Deskriptor in der Auslieferungskontrollumgebung (30) gespeichert sind.

4. System nach einem Ansprüche 1 bis 3, wobei das zweite und das dritte Netzwerk (3, 4) vorzugsweise physisch voneinander getrennt sind, und/oder die Auslieferungskontrollumgebung zur Trennung der Netzwerke (3, 4) erste Sicherheitseinrichtungen (31, 33, 35, 36, 38) aufweist, wobei die ersten Sicherheitseinrichtungen (31, 33, 35, 36, 38) über die Sicherheitsrichtlinien gesteuert werden.

5. System nach einem der Ansprüche 1 bis 4, wobei die Entwicklungsumgebung (10, 20) eine Zuliefererumgebung (10) und eine Integrationsumgebung (20) aufweist, die über ein viertes Netzwerk (1) verbunden sind;
wobei die Integrationsumgebung (20) ein Versionskontrollrepositorium (22) und ein Softwareartefakt-Repositorium (23) aufweist.

6. System nach Anspruch 5, wobei die Integrationsumgebung (20) zur Trennung der Netzwerke (2, 3, 4) zweite Sicherheitseinrichtungen (21, 24) aufweist, wobei die zweiten Sicherheitseinrichtungen (21, 24) über die Sicherheitsrichtlinien gesteuert werden.

7. System nach einem der Ansprüche 1 bis 6, wobei ein Release-Bundle mindestens eines der folgenden enthält:
a) paketierte Software , vorzugsweise in einem rpm und/oder deb Paketformat,
b) Software-Images, vorzugsweise virtual machine images und/oder container images,
c) generische Dateien, vorzugsweise tar und/oder zip Archive,
d) VNF Pakete und Artefakte gemäß NVF-MANO Architektur,
und/oder ein Release-Bundle ein weiteres Release-Bundle enthält.

8. System nach einem der Ansprüche 1 bis 7, wobei die Steuerungsdateien yaml, json, und/oder xml Formate nutzen; und/oder
wobei die Beschreibungsdateien kryptographisch signiert sind, um deren Authentizität und Integrität zu garantieren.

9. System nach einem der Ansprüche 1 bis 8, wobei die Beschreibungsdateien vor ihrer Ausführung von einer Policy-Funktion, basierend auf einer Sicherheitsrichtlinie, auf Zulässigkeit überprüft werden.

10. Verfahren zur Steuerung eines Systems nach einem der vorstehenden Ansprüche, wobei das Verfahren die folgenden Schritte aufweist:
a) Bereitstellen eines Release-Bundles von der Entwicklungsumgebung (10, 20) an die Auslieferungskontrollumgebung (30) über die erste Netzwerkverbindung;
b) Bereitstellen des Release-Bundles auf dem ersten und/oder zweiten Softwareartefakt-Repositorium (37, 34) durch die Staging-Kontrollfunktion (32) und Veröffentlichen des Release-Bundles auf dem ersten und/oder zweiten Softwareartefakt-Repositorium (37, 34) durch die Staging-Kontrolleinheit (32);
c) Auslieferung des Release-Bundles von dem zweiten Softwareartefakt-Repositorium (34) an die Testumgebung (40) nach Anforderung durch einen manuellen und/oder automatisierten Anforderungsprozess (41, 42) in der Testumgebung (40) und Test des Release-Bundles in der Testumgebung (40).
d) Bereitstellen und Veröffentlichen des Release-Bundles auf dem ersten und dem zweiten Softwareartefakt-Repositorium (37, 34) durch die Staging-Kontrolleinheit (32);
e) Auslieferung des Release-Bundles von dem ersten Softwareartefakt-Repositorium (37) an die Produktionsumgebung (50) nach einer Pull-Anforderung durch einen manuellen und/oder automatisierten Anforderungsprozess (51, 52) in der Produktionsumgebung (40).

11. Computerprogrammprodukt, umfassend Befehle, die bei der Ausführung des Programms durch einen Computer diesen veranlassen, das Verfahren nach Anspruch 10 auszuführen.
